Europäisches Patentamt

European Patent Office

Office européen des brevets

(19)

(11)  EP 0 735 660 B1

## (12)  EUROPEAN PATENT SPECIFICATION

(45)  Date of publication and mention
of the grant of the patent:
**27.05.1998  Bulletin 1998/22**

(51)  Int Cl.⁶: **H02P 1/00**, H02P 6/18

(21)  Application number: **95830124.4**

(22)  Date of filing: **31.03.1995**

(54)  **Method for driving a brushless DC electric motor**

Steuerungsverfahren für einen elektrischen, bürstenlosen Gleichstrommotor

Méthode de commande d'un moteur électrique à courant continu sans balai

(84)  Designated Contracting States:
**DE FR GB IT**

(43)  Date of publication of application:
**02.10.1996  Bulletin 1996/40**

(73)  Proprietor: **SGS-THOMSON
MICROELECTRONICS s.r.l.
20041 Agrate Brianza (Milano) (IT)**

(72)  Inventors:
 • **Galbiati, Ezio
I-26020 Agnadello (Cremona) (IT)**
 • **Maiocchi, Giuseppe
I-22079 Villa Guardia (Como) (IT)**

(74)  Representative: **Botti, Mario
Porta, Checcacci & Botti S.r.l.
Viale Sabotino 19/2
20135 Milano (IT)**

(56)  References cited:
**EP-A- 0 584 855          EP-A- 0 602 977
US-A- 5 307 439**

 • **EDN-ELECTRICAL DESIGN NEWS, vol. 37, no. 9,
23 April 1992 NEWTON, MA, USA, pages 43-48, XP
000288745 J.D.MOSLEY 'Sensorless
motor-control ICs, Spin Chips whirl into
nondrive applications'**
 • **PATENT ABSTRACTS OF JAPAN vol. 16 no. 459
(E-1268) ,24 September 1992 & JP-A-04 061081
(H.ENAMI) 4 June 1992,**

## Description

This invention relates to a method of driving a brushless DC motor.

In particular, the invention relates to a method of driving a direct current motor of the brushless type by means of an electronic driver circuit effective to establish a first or a second mode of operation and comprising means for detecting a zero crossing in the electromotive force, as shown in EP-A-0 584 855.

Prior Art

The use of brushless dc motors is gaining increasing acceptance by reason of the small electric noise of such motors.

These motors generally come equipped with position sensors which are utilized for electronically switching, via a driver circuit, the flow of current through the winding phases.

In other instances, it is possible to re-construct, by virtue of the electromagnetic forces induced by the rotation of the permanent magnet relative to the stator winding (BEMFs), the electric signals due to such forces, and to utilize the zero crossings of these signals (BEMF zero cross) to determine the rotor position. In this way, the switchings can be synchronized by means of such electric signals.

Motors of the last-mentioned type include no position sensors (sensorless motors).

These motors are usually driven by a LINEAR type of current control, using integrated power circuits wherein the output stage which powers the winding phases comprises a full-wave three-phase bridge circuit having at least six MOS power transistors.

The motor current is controlled in a LINEAR manner by a transconductance feedback loop.

The MOS power transistor associated with a given phase and functioning as a current source is brought to full conduction, i.e. to its saturation range of operation. The MOS drain transistor associated with that phase functions instead as a transconductance element.

For low-power applications, such as with hard disk readers intended for computers having at most one or two disks driven by sensorless brushless motors which have smaller pickup currents than 1.5A and smaller steady-state currents than 300mA, the aforementioned transconductance loop provides one of the best solutions.

However, for high-power applications, such as with hard disk readers intended for computers having more than two disks driven by sensorless brushless motors which require larger pickup currents than 3A and larger steady-state currents than 500mA, the previously described transconductance loop shows to be inadequate both in terms of power dissipation and power drain.

In order to reduce power consumption in high-power applications, certain methods have been proposed as discussed herein below.

A first solution provides enhanced power handling capability for the output stage of the integrated circuit through the use of a single, P-channel external MOS transistor of a discrete type.

In that way, the output stage of the IC would be operated at cutoff or saturation, with the transconductance power loop control function being performed by the discrete external component.

An inherent disadvantage of this solution is, of course, that an expensive discrete component is additionally required.

A second technical solution provides PWM control of the motor current amplitude at the stages of motor startup or speed pickup; it being a well recognized fact that the power dissipation through the output stage of the integrated circuit mostly occurs at the motor startup or pickup stages.

Thus, this technique proposes of switching the motor current control from a PWM (Pulse Width Modulation) mode during the startup and speed pickup stages to a LINEAR mode upon the rotor attaining a predetermined nominal speed.

In this way, a large amount, perhaps as much as 50%, of the power normally dissipated at startup or during the speed pickup stage can be saved.

This is an efficient solution with systems which require small control currents for the motor torque at rated speed; the control being provided by the LINEAR transconductance loop.

A third solution is available which is mainly adopted where comparatively large currents are needed to control the motor torque at rated speed. In this case, the motor current would be controlled in the PWM mode both at startup and while running at rated speed to keep the internal power dissipation low and reduce power consumption.

To appreciate the disadvantages of this solution, the BEMFs (Back ElectroMotive Forces) should be considered. As the electric generated signals corresponding to such electromotive forces cross a line of zero level, a BEMF zero cross condition is met.

This crossing of the zero level line identifies a precise position of the rotor relative to the stator. The best phase-switching position can be obtained from this information in terms of minimum torque ripple.

The time lapse between successive zero crossings is called the switching period, Tc.

An inherent disadvantage of the third solution just described is that the detection of the induced electromotive force zero crossing (BEMF zero cross) must be enabled well apart from the current switchings produced by the PWM mode control, if noise induced by these switchings is not to yield false zero-crossing readings. In this way, however, the passages through the zero-level line may be detected at locations other than the real ones, resulting in the motor phases being switched at less than optimum positions in terms of minimum output torque ripple.

The underlying technical problem of this invention is to avoid detecting zero crossings at different positions from the real ones, while retaining the advantages of a current control in the PWM mode.

## Summary of the Invention

A solution to this problem is recited in claim 1.

The idea on which this invention stands is one of providing PWM control, at the startup or speed pickup stages, by switching to linear control a suitably calculated time ahead of a zero crossing to be detected.

This time is advantageously calculated as a fraction of the switching period Tc immediately preceding it.

After detecting a zero crossing of the electromotive force, the mode is restored to PWM.

The features and advantages of the method according to the invention will be apparent from the following detailed description of an embodiment thereof, given by way of non-limitative example with reference to the accompanying drawings.

## Brief Description of the Drawings

Figure 1 is a block diagram representation of a power output stage in a driver circuit for a brushless electric motor.

Figure 2 is a schematic of a circuit block included in said driver circuit and being connected to inputs of the stage shown in Figure 1, the block being to generate switch signals for switching between two different driving modes.

Figure 3 is a schematic of the driver circuit including the power stage of Figure 1.

Figure 4 shows a set of graphs, plotted against the same time base, of signals present in the circuit of Figure 3.

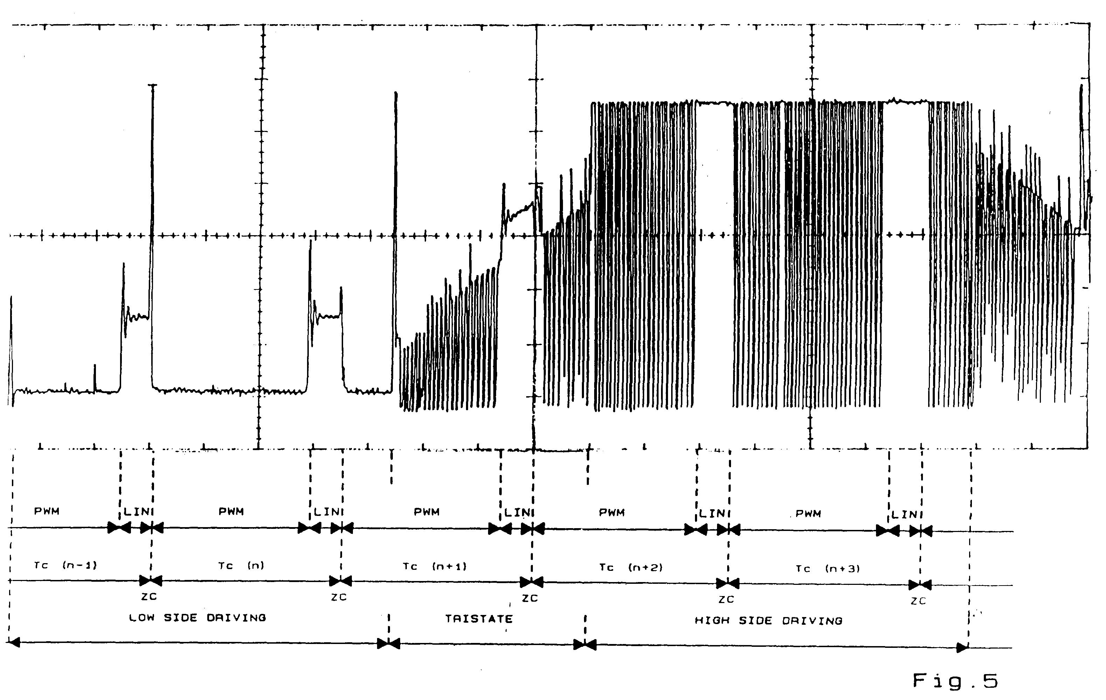

Figure 5 illustrates the pattern vs. time of a voltage signal present at an output terminal of the stage in Figure 1.

## Detailed Description

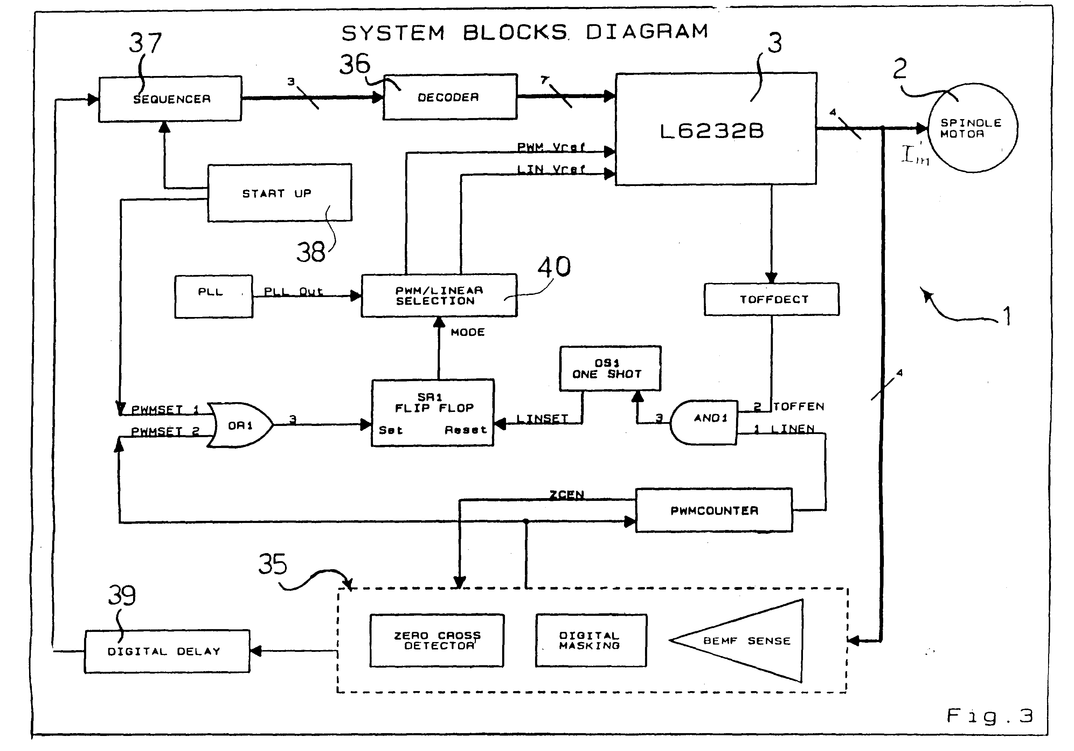

Referring to the drawings, and specifically to the example of Figure 3, generally and schematically shown at 1 therein is a driver circuit for a DC motor 2 of the so-called brushless type.

The circuit 1 comprises a power output stage 3 of the monolithically integrated type and having a plurality of output terminals, each connected to a respective phase of the motor 2.

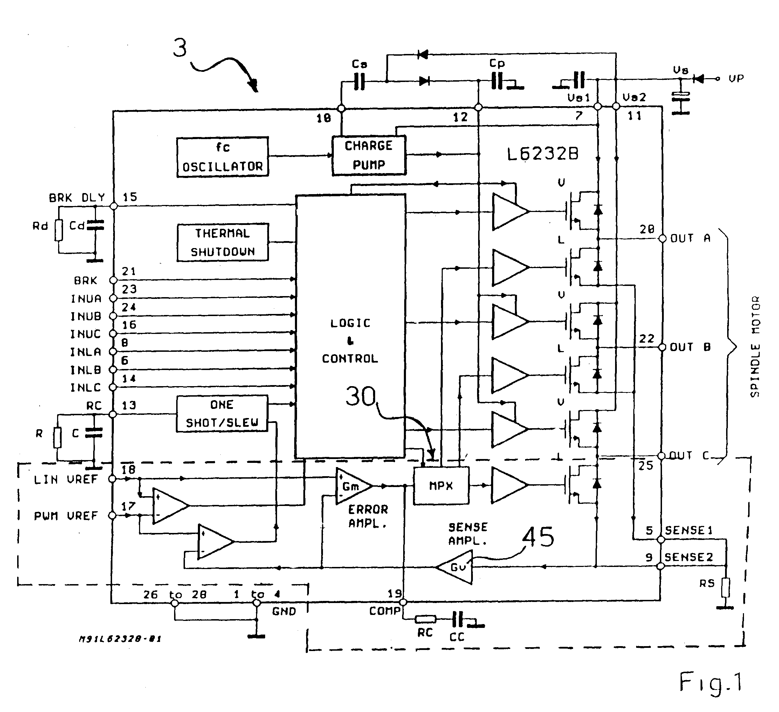

The internal construction of the stage 3 is shown in greater detail in Figure 1, and no detailed description of it will be given herein, in view of an integrated circuit identified as part L6232B manufactured by this Applicant and a covering handbook being available.

The stage 3 has three output terminals A, B and C connected downstream from corresponding half-bridge driver circuits which comprise MOS power transistors.

The stage 3 includes all of circuitry needed to drive the motor 2 in either the PWM (Pulse Width Modulation) and LINEAR modes.

The switching between these two modes is established by the lower of two input voltage values, PWM-Vref and LIN-Vref, applied to respective input terminals 17 and 18 of the stage 3.

These voltages are generated on respective outputs of a selector 40 which is input two discrete signals, PLLOUT and MODE. The first input signal is output from a block PLL, and the second input signal is output from a flip-flop type of storage element SR1 having set and reset inputs.

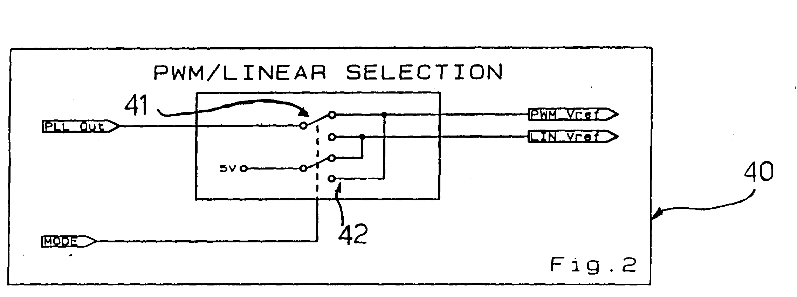

Shown in Figure 2 is the internal construction of the selector 40, which comprises basically a pair of electronic switches 41 and 42 being connected to each other and both controlled to close by the signal MODE.

Coming back to the stage 3, it can be seen that the voltage at the inputs 17 and 18 produces an error signal which is used internally to regulate a current Im for supply to the motor 2.

In both the PWM and LINEAR modes, the current Im is expressed by the following:

$$Im = Vref/(Gv*Rs)$$

where: Vref is a control voltage output from a block PLL of the circuit 1; Gv is the voltage gain of a sense amplifier 45 of the stage 3; and Rs is the value of an external resistive sensor connected to output terminals 5 and 9 of the stage 3.

In the LINEAR mode, the current Im is regulated by a transconductance loop, generally shown at 30, which drives MOS power transistors, denoted by L in Figure 1, via a multiplexer MPX.

On the other hand, in the PWM mode, as the current Im attains a predetermined value, MOS power transistors denoted by U in Figure 1 are turned off for a time period Toff. A detecting circuit TOFFDECT, connected to the stage 3, conveniently determines the off state of such transistors U.

The output from this detector TOFFDECT is applied, through a logic gate AND1, to a pulse generator OS1 which is connected upstream of the storage element SR1 of the flip-flop type.

Specifically, the output of the generator OS1 is connected to the reset input of the storage element SR1, which receives on its set input a signal from a second logic gate OR1 having two inputs respectively connected to an output of a starting circuit (START UP) 38 and to an output of a detecting circuit 35 to be described.

This output from the detecting circuit 35 is also applied to a counter PWMCOUNTER whose output is connected to the second input of the first logic gate AND1.

A second output of the circuit 35 is connected to a delay block 39 connected serially to a sequencer 37 which is connected, in turn, serially to a decoder 36 whose outputs are applied to the power stage 3.

The detecting circuit 35 is connected directly to the outputs of the stage 3, namely the same outputs from which the motor 2 is driven, and comprises, in series, an electromotive force sensor BEMF SENSE, a digital filter DIGITAL MASKING, and a further detector ZERO CROSS DETECTOR for detecting zero crossings by the electromotive force BEMF.

The method of this invention is primarily dependent on determining the switching time Tc between two successive zero crossings by the corresponding signal to the electromotive force BEMF.

US Patent No. 5,231,338 discloses a method of measuring the time Tc which can be used to also determine the time length of a so-called masking period required to filter the signals BEMF after a phase switching and to detect the actual location of the signal BEMF zero crossing.

With the switching period Tc between two previous crossings measured by a counter being known, the arrangement described in the above patent can predict with great accuracy the time of the next crossing of the zero line.

This also applies to the startup stage, when with the motor still at a slow pickup speed, two successive values of Tc are bound to differ little from each other. All of the subsequent steps of detecting the actual position of zero crossing would be synchronized to the period Tc.

The method of this invention uses a similar principle to that disclosed in the above patent. In particular, this method distinguishes itself by that the change from the PWM mode over to the LINEAR mode is effected in a synchronized manner to the time period Tc.

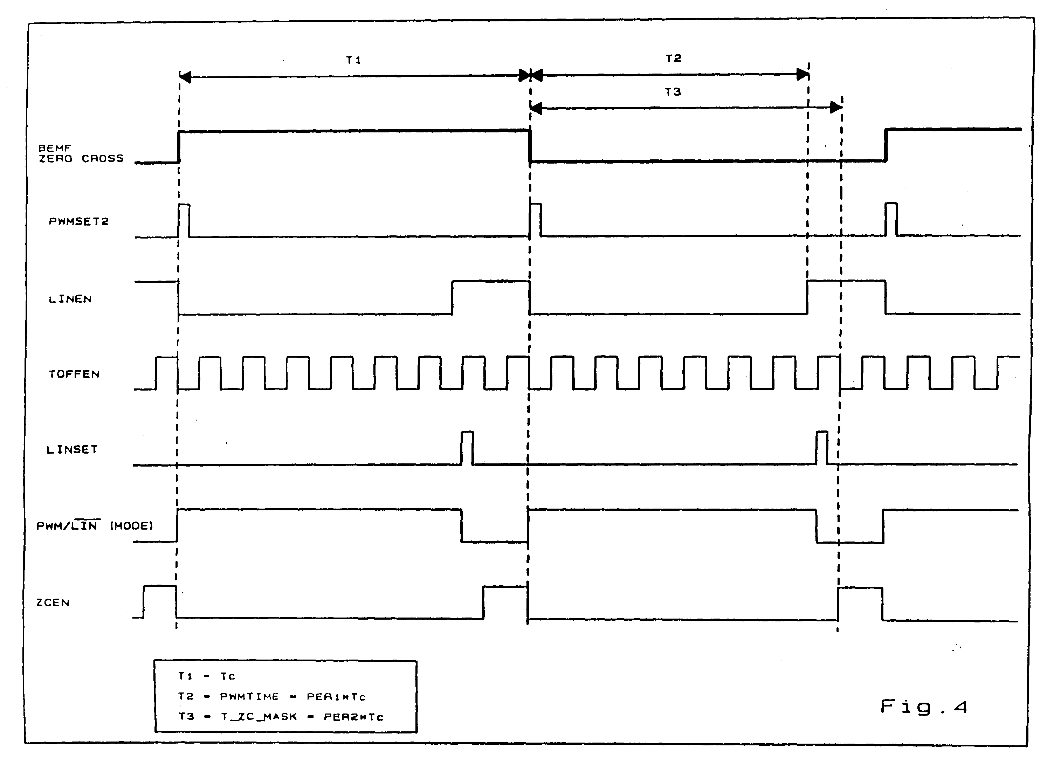

Referring in particular to Figure 3 and the graphs in Figure 4, the method of this invention will now be described in greater detail.

The PWM driving mode is set at the motor 2 startup, when a startup procedure would be carried out by the block START UP 38.

Throughout the discussion to follow, PWMTIME will denote the time period when the PWM mode is enabled. During this period the switching from the PWM mode to the LINEAR mode is enabled.

T_ZC_MASK is the masking period, during which the electromotive force switching detector 35 (BEMF zero cross detector) is disabled to mask off the switching noise during the change from the PWM mode to the LINEAR mode.

PER1 is the percent fraction of the period Tc when the PWM mode is enabled but the switching from the PWM mode to the LINEAR has not yet been enabled. This is a value which can be programmed by the user.

PER2 is the percent fraction of the period Tc when the electromotive force switch detector 35 (BEMF zero cross detector) is disabled. This is also a value which can be programmed by the user.

Now, the period Tc of the last switching of the startup procedure can be measured as described, for example, in US Patent No. 5.231.338, and the following values can be obtained based on this:

$$PWMTIME = PER1*Tc$$

$$T\_ZC\_MASK = PER2*Tc.$$

In Figure 4, the period Tc is denoted by T1, and the periods PWMTIME and T_ZC_MASK are denoted by T2 and T3, respectively.

On the time period PWMTIME having elapsed, the PWM mode to LINEAR mode switching is enabled. This switching is set by the leading edge of a signal TOFFEN output from the detector TOFFDECT and whose pattern is shown in Figure 4.

On expiration of the time period T_ZC_MASK, on the other hand, the electromotive force zero crossing detector 35 (BEMF zero cross detector) is enabled.

At the very time when a switching occurs through the zero line and a new period Tc commenced, the values PWMTIME and T_ZC_MASK are re-calculated and the PWM mode is enabled once again.

The startup block sets the PWM mode by means of a pulse PWMSET1 which is applied to the storage element SR1 via a second logic gate OR1.

The PWM mode is set immediately after each switching of the electromotive force across the zero line by supplying a second signal PWMSET2 to the storage element SR1, again via the second logic gate OR1.

Meanwhile, the counter PWMCOUNTER, as preloaded with the value PER" obtained from the preceding switching time Tc, initiates a counting step.

Upon the counter reaching the value PWMTIME, the LINEAR mode is set, bringing the signal LINEN to a logic high.

In addition, as the signal TOFFEN is also brought to a logic high, the logic gate AND1 enables the block OS1 to reset, by a signal LINSET, the storage element SR1 and complete the switch to the LINEAR mode.

Upon the counter PWMCOUNTER reaching the value T_ZC_MASK, the switching detector 35 is enabled by a signal ZCEN.

The time period PER1*Tc can also be defined when the change from the PWM mode to the LINEAR mode is yet to be enabled; while the value (PER2-PER1)*Tc is the time required to mask off the switching noise in the transition between the two modes of operation.

As soon as a new switching of the electromotive force BEMF is detected, the PWM mode is set again on the set input of the storage element SR1 by means of the signal PWMSET2. The counter PWMCOUNTER is reset and the count cycle repeated.

The signal TOFFEN only synchronizes the PWM to LINEAR mode switching during the off period Toff, that is as the current is flowing again, thereby providing a reduced current transient.

The method of this invention does solve the technical problem, and affords a number of advantages first among which is undoubtedly the fact that the motor 2 is operated in the PWM mode for most of the time, with reduced power drain and reduced power dissipation.

Switching to the LINEAR mode only occurs for a predetermined short time before the electromotive force BEMF is switched over. The actual point of zero crossing during the electromotive force switching is detected accurately, thereby improving the system performance in terms of accuracy and consistency of the motor rotational speed.

Also, no special circuits are required to mask the electromotive force switching detector during switchings brought about by the motor current control in the PWM mode.

**Claims**

1. A method of driving a direct current (DC) motor (2) of the brushless type by means of an electronic driver circuit effective to establish a first (PWM) or a second (LINEAR) mode of operation and comprising means for detecting a zero crossing in the electromotive force (BEMF), characterized in that it comprises the steps of:

   - starting the motor driving in the first mode (PWM);

   - detecting the time period (Tc) between two successive swtchings of the electromotive force (BEMF);

   - switching the driving mode to the second mode (LINEAR) strictly for the time required to detect the actual switching of the electromotive force (BEMF);

   - switching again the driving mode back to the first mode (PWM).

2. A method according to Claim 1, characterized in that the duration of the first mode (PWM) is calculated as a percent fraction of the switching time (Tc).

3. A method according to Claim 1, characterized in that the electromotive force (BEMF) zero crossing detection mode is masked off for a time period (T_ZC_MASK) which is calculated as a percent fraction (PER2) of the switching time (Tc), thereby to have the switching noise masked off.

4. A method according to Claim 1, characterized in that the switching from the first mode (PWM) to the second mode (LINEAR) is synchronized during the off period (Toff) of the first mode (PWM).

5. A method according to Claim 1, characterized in that the first mode (PWM) is set immediately after each switching of the electromotive force (BEMF) across the zero line.

**Patentansprüche**

1. Verfahren zum Steuern eines bürstenlosen Gleichstrommotors (2) mit Hilfe einer elektronischen Treiberschaltung, mit der eine erste (PWM) oder eine zweite (LINEAR) Betriebsart einrichtbar ist, umfassend eine Einrichtung zum Nachweisen eines Nulldurchgangs der elektromotorischen Kraft (BEMF), **dadurch gekennzeichnet,** daß es folgende Schritte beinhaltet:

   Starten der Motorsteuerung in der ersten Betriebsart (PWM);

   Nachweisen der Zeitspanne (Tc) zwischen zwei aufeinanderfolgenden Richtungswechseln der elektromotorischen Kraft (BEMF);

   Umschalten der Steuerungsart auf die zweite Betriebsart (LINEAR) exakt für die Zeit, die erforderlich ist, um den aktuellen Richtungswechsel der elektromotorischen Kraft (BEMF) nachzuweisen;

   erneutes Umschalten der Steuerungsart zurück auf die erste Betriebsart (PWM).

2. Verfahren nach Anspruch 1, **dadurch gekennzeichnet,** daß die Dauer der ersten Betriebsart (PWM) berechnet wird als prozentualer Bruchteil der Umschaltzeit (Tc).

3. Verfahren nach Anspruch 1, **dadurch gekennzeichnet,** daß das Nachweisen der Nulldurchgänge der elektromotorischen Kraft (BEMF) für eine Zeitspanne (T_ZC_MASK) ausgeblendet wird, welche berechnet wird als prozentualer Bruchteil (PER2) der Richtungswechselzeitspanne (Tc), um dadurch das Schaltrauschen auszublenden.

4. Verfahren nach Anspruch 1, **dadurch gekennzeichnet,** daß das Umschalten von der ersten Betriebsart (PWM) in die zweite Betriebsart (LINEAR) während der Ausschaltzeitspanne (Toff) der ersten Betriebsart (PWM) synchronisiert wird.

5. Verfahren nach Anspruch 1,

**dadurch gekennzeichnet,** daß die erste Betriebsart (PWM) unmittelbar nach jedem Richtungswechsel der elektromotorischen Kraft (BEMF) über die Nullinie eingestellt wird.

## Revendications

1. Une méthode de commande d'un moteur (2) à courant continu (DC) sans balai au moyen d'un circuit de commande électronique apte à établir un premier mode de fonctionnement (PWM) et un second (LINEAR), et comprenant des moyens pour détecter un passage à zéro de la force électromotrice (BEMF), caractérisée en ce qu'elle comprend les étapes suivantes :

   - démarrer le moteur en le commandant selon le premier mode (PWM) ;
   - détecter la période de temps (Tc) entre deux passages à zéro successifs de la force électromotrice (BEMF) ;
   - commuter le mode de commande sur le second mode (LINEAR) juste pour la durée nécessaire à détecter le passage à zéro réel de la force électromotrice (BEMF) ;
   - commuter à nouveau le mode de commande pour repasser au premier mode (PWM).

2. Une méthode selon la revendication 1, caractérisée en ce que la durée du premier mode (PWM) est calculée en tant que pourcentage du temps d'alternance (Tc).

3. Une méthode selon la revendication 1, caractérisée en ce que le mode de détection de passage à zéro de la force électromotrice (BEMF) est masqué pour une période de temps (T_ZC_MASK) qui est calculée en tant que pourcentage (PER2) du temps d'alternance (Tc), afin que le bruit de commutation soit masqué.

4. Une méthode selon la revendication 1, caractérisée en ce que la commutation du premier mode (PWM) au second mode (LINEAR) est synchronisée durant la période de coupure (Toff) du premier mode (PWM).

5. Une méthode selon la revendication 1, caractérisée en ce que le premier mode (PWM) est établi immédiatement après chaque passage à zéro de la force électromotrice (BEMF).

Fig.1

EP 0 735 660 B1

PWM/LINEAR SELECTION

PWM Vctl

LIN Vctl

PLL Out

MODE

5V

41

42

40

Fig.2

SYSTEM BLOCKS DIAGRAM

SPINDLE MOTOR

L6232B

DECODER

SEQUENCER

START UP

PLL

PWM/LINEAR SELECTION

SR1 FLIP FLOP

OS1 ONE SHOT

AND1

TOFFDECT

PWMCOUNTER

BEMF SENSE

DIGITAL MASKING

ZERO CROSS DETECTOR

DIGITAL DELAY

OR1

Fig.3

Fig.4

| | |
|---|---|
| T1 = Tc | |
| T2 = PWMTIME = PER1×Tc | |
| T3 = T_ZC_MASK = PER2×Tc | |

BEMF ZERO CROSS

PWMSET2

LINEN

TOFFEN

LINSET

PWM/LIN (MODE)

ZCEN

T1

T2

T3

Fig.5

EP 0 735 660 B1